# EUROPÄISCHE PATENTANMELDUNG

(11) **EP 2 228 857 A1**
(43) Veröffentlichungstag der Anmeldung: **15.09.2010**
(21) Anmeldenummer: 09003257.4
(22) Anmeldetag: 06.03.2009
(51) Int. Cl.: H01M 4/86, H01M 8/10, H01M 8/02

(54) **Verbesserte Membran-Elektrodeneinheiten**

(71) Anmelder: BASF SE, 67056 Ludwigshafen (DE)
(72) Erfinder: Uensal, Oemer, 55128 Mainz (DE); Bräuninger, Sigmar, 69502 Hemsbach (DE); Urban, Werner, 68199 Mannheim (DE)
(74) Vertreter: Luderschmidt, Schüler & Partner

(57) **Zusammenfassung**

Membran-Elektrodeneinheit, umfassend mindestens eine Phosphorsäure-haltige Polymerelektrolytmembran und mindestens eine Gas-Diffusionselektrode, wobei die Gas-Diffusionselektrode umfasst:
i. mindestens eine Katalysatorschicht und
ii. mindestens ein Gasdiffusionsmedium, aufweisend mindestens zwei Gasdiffusionsschichten,
■ wobei die erste Gasdiffusionsschicht eine elektrisch leitende makroporöse Schicht umfasst, bei welcher die Poren einen mittleren Porendurchmesser im Bereich von 10 µm bis 30 µm aufweisen,
■ wobei die zweite Gasdiffusionsschicht eine elektrisch leitende makroporöse Schicht umfasst, bei welcher die Poren einen mittleren Porendurchmesser im Bereich von 10 µm bis 30 µm aufweisen,
■ wobei das Gasdiffusionsmedium Polytetrafluoroethylen enthält,
■ wobei die erste Gasdiffusionsschicht eine höhere Polytetrafluoroethylen-Konzentration aufweist als die zweite Gasdiffusionsschicht.

## Beschreibung

Die vorliegende Erfindung betrifft verbesserte Membran-Elektrodeneinheiten, aufweisend zwei elektrochemisch aktive Elektroden, die durch eine Polymer-Elektrolyt-Membran getrennt werden.

In Polymer-Elektrolyt-Membran(PEM)-Brennstoffzellen werden heute als protonenleitende Membranen fast ausschließlich sulfonsäuremodifizierte Polymere eingesetzt. Dabei finden überwiegend perfluorierte Polymere Anwendung. Prominentes Beispiel hierfür ist Nafion® von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks auf 80 - 100 °C. Höhere Betriebstemperaturen können ohne einen Verlust an Leistung der Brennstoffzelle nicht realisiert werden. Bei Temperaturen, die für ein gegebenes Druckniveau, oberhalb des Taupunktes von Wasser liegen, trocknet die Membran komplett aus, und die Brennstoffzelle liefert keine elektrische Energie mehr, da der Widerstand der Membran auf so hohe Werte steigt, dass kein nennenswerter Stromfluss mehr erfolgt.

Aus systemtechnischen Gründen werden aber höhere Betriebstemperaturen als 100 °C in der Brennstoffzelle gewünscht. Die Aktivität der in der Membran-Elektroden-Einheit (MEE) enthaltenen Katalysatoren auf Edelmetallbasis ist bei hohen Betriebstemperaturen wesentlich besser.

Insbesondere bei der Verwendung von sogenannten Reformaten aus Kohlenwasserstoffen sind im Reformergas deutliche Mengen an Kohlenmonoxid enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des Weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass in Brennstoffzellensystemen, die bei Temperaturen über 100°C betrieben werden, die Abwärme deutlich besser nutzbar gemacht und somit die Brennstoffzellensystem-Effizienz gesteigert werden kann.

Um diese Temperaturen zu erreichen, werden im Allgemeinen Membranen mit neuen Leitfähigkeitsmechanismen verwendet, insbesondere Membranen auf der Basis von Polyazolen. Derartige Membranen werden beispielsweise in der DE 10 2005 038195 ausführlich beschrieben.

In dieser Druckschrift wird auch die Herstellung von Membran-Elektroden-Einheiten erläutert, die in Brennstoffzellen eingesetzt werden können. Die Membran-Elektroden-Einheiten sollen zwei Gasdiffusionsschichten umfassen, die jeweils mit einer Katalysatorschicht in Kontakt stehen, die durch die Polymer-Elektrolyt-Membran getrennt werden.

Als Gasdiffusionsschichten werden in diesem Zusammenhang flächige, elektrisch leitende und säureresistente Gebilde eingesetzt, wie z. B. Graphitfaser-Papiere, Kohlefaser-Papiere, Graphitgewebe und/oder Papiere, die durch Zugabe von Ruß leitfähig gemacht wurden.

Die Katalysatorschichten sollen katalytisch aktive Substanzen, wie z. B. Edelmetalle der Platingruppe, d.h. Pt, Pd, Ir, Rh, Os, Ru, oder auch die Edelmetalle Au und Ag, enthalten. Dabei können die Metalle ggf. auf einem Trägermaterial, wie z. B. Kohlenstoff, der insbesondere in Form von Ruß, Graphit oder graphitisierter Ruß, eingesetzt werden. Ferner ist es möglich, dass die katalytisch aktiven Schichten weitere Additive, wie z. B. Fluorpolymere, insbesondere Polytetrafluorethylen (PTFE), protonenleitende lonomere und oberflächenaktive Substanzen, umfassen.

Die Herstellung derartiger Elektroden erfolgt üblicherweise unter Verwendung einer Katalysatortinte, die einen Katalysator Edelmetall, wie z. B. Platin, auf einem Trägermaterial, wie z. B. Ruß, einen Binder und Hydrophobiesierungsagens, wie z.B. PTFE, ein Tensid und ein Verdickungsmittel, wie z.B. Methylcellulose, enthält. Jedoch reagiert der eingesetzte Elektrodenkatalysator meist sauer, so dass die Katalysatortinte mit den genannten Komponenten einen sauren pH-Wert aufweist. Dies hat zur Folge, dass PTFE aus der Zusammensetzung ausflockt, da die PTFE-Partikel nur alkalisch stabilisiert werden können.

Nach der Herstellung werden das Tensid durch Sintern bei höheren Temperaturen, meist größer 300°C, zersetzt und das Bindemittel getempert. Diese hohen Temperaturen schaden jedoch nachweislich der Katalysatoraktivität. Außerdem kann die Temperaturbehandlung zu einer Oxidation des Trägermaterials führen, welches wiederum die Leistungsfähigkeit und Lebensdauer der Elektrode signifikant beeinträchtigen kann.

Aus der Publikation X. L. Wang et al. Micro-porous layer with composite carbon black for PEM fuel cells Electrochimica Acta 51 (2006) 4909-4915 sind Gasdiffusionsschichten für Brennstoffzellen bekannt, die eine makroporöse Gasdiffusionsschicht aus Kohlefaser-Papier oder Graphitgewebe und eine mikroporöse Schicht umfassen.

Dabei wird die mikroporöse Schicht erhalten, indem man Ruß und ein Hydrophobierungsmittel auf die Ober- und die Unterseite Seite der makroporösen Gasdiffusionsschicht aufbringt. Die Aufgabe der mikroporösen Schicht soll darin bestehen, die richtige Porenstruktur und Hydrophobizität bereitzustellen, um eine Katalysatorschicht auf die membrangerichteten Seite zu bringen und einen besseren Gastransport und eine bessere Wasserentfernung von der Katalysatorschicht zu ermöglichen und um den elektrischen Kontaktwiderstand zur Katalysatorschicht zu verringern.

Die Gasdiffusionsschichten werden unter Verwendung einer Nafion®-Membran bei 80°C getestet, die auf der Ober- und der Unterseite mit einer homogenen perfluoro Polymer (PF)/C-Mischung beschichtet wurde. Derartige Systeme führen jedoch wegen der kleinen Poren auf der Rückseite der Gasdiffusionsschicht bei Betriebstemperaturen oberhalb 100 °C zu Problemen und zu einer Leistungsabnahme. So ist insbesondere die Durchgangsluftdurchlässigkeit bei 200 Pa gemäß der Testnorm EN ISO9237 kleiner als 5 I/m²s.

Aufgabe der vorliegenden Erfindung war daher, eine verbesserte MEE und damit betriebene Brennstoffzellen bereitzustellen, die vorzugsweise die folgenden Eigenschaften aufweisen sollten:
- Die Zellen sollten bei einem Betrieb bei Temperaturen über 100°C eine lange Lebensdauer zeigen.
- Die Einzelzellen sollten eine gleichbleibende oder verbesserte Leistung bei Temperaturen über 100°C über einen langen Zeitraum zeigen.
- Hierbei sollten die Brennstoffzellen nach langer Betriebszeit eine hohe Ruhespannung sowie einen geringen Gasdurchtritt aufweisen (gas cross over).
- Die Brennstoffzellen sollten insbesondere bei Betriebstemperaturen oberhalb von 100°C eingesetzt werden können und ohne zusätzliche Brenngasbefeuchtung auskommen. Insbesondere sollten die Membran-Elektroden-Einheiten permanenten oder wechselnden Druckdifferenzen zwischen Anode und Kathode widerstehen können.
- Des Weiteren war es mithin Aufgabe der vorliegenden Erfindung eine Membran-Elektroden-Einheit zur Verfügung zu stellen, die einfach und kostengünstig hergestellt werden kann. Hierbei sollte insbesondere möglichst wenig von teuren Materialien eingesetzt werden.
- Insbesondere sollte die Brennstoffzelle auch nach langer Zeit eine hohe Spannung aufweisen und bei niedriger Stöchiometrie betrieben werden können.
- Insbesondere sollte die MEE robust gegen unterschiedliche Operationsbedingungen (T, p, Geometrie etc.) sein um die allgemeine Zuverlässigkeit zu erhöhen.
- Weiterhin sollte teures Edelmetall, insbesondere Platinmetalle, sehr effektiv ausgenutzt werden.

Weiterhin sollten Möglichkeiten zur möglichst einfachen, möglichst kostengünstigen und möglichst effektiven Herstellung derartiger MEEs aufgezeigt werden.

Gelöst werden diese Aufgaben durch Membran-Elektroden-Einheiten mit allen Merkmalen des Anspruchs 1. Weiterhin werden ein besonders vorteilhaftes Verfahren zur Herstellung derartiger Membran-Elektroden-Einheiten und besonders zweckmäßige Anwendungen unter Schutz gestellt.

Gegenstand der vorliegenden Erfindung ist dementsprechend eine Membran-Elektrodeneinheit, umfassend mindestens eine Phosphorsäure-haltige Polymerelektrolytmembran und mindestens eine Gas-Diffusionselektrode, wobei die Gas-Diffusionselektrode umfasst:
i. mindestens eine Katalysatorschicht und
ii. mindestens ein Gasdiffusionsmedium, aufweisend mindestens zwei Gasdiffusionsschichten,
   ■ wobei die erste Gasdiffusionsschicht eine elektrisch leitende makroporöse Schicht umfasst, bei welcher die Poren einen mittleren Porendurchmesser im Bereich von 10 µm bis 30 µm aufweisen,
   ■ wobei die zweite Gasdiffusionsschicht eine elektrisch leitende makroporöse Schicht umfasst, bei welcher die Poren einen mittleren Porendurchmesser im Bereich von 10 µm bis 30 µm aufweisen,
   ■ wobei das Gasdiffusionsmedium Polytetrafluoroethylen enthält, wobei die erste Gasdiffusionsschicht eine höhere PolytetrafluoroethylenKonzentration aufweist als die zweite Gasdiffusionsschicht.

### Polymer-Elektrolyt-Membranen

Für die Zwecke der vorliegenden Erfindung geeignete Polymer-Elektrolyt-Membranen sind an sich bekannt und werden insbesondere in US5,525,436, DE10117687.2, DE1011752.8, DE10331365.5, DE10052242.2, US2008160378, US2008233435, DE20217178 und Handbook of Fuel Cells - Fundamentals and Technology and Applications, Vol. 3, Chapter 3, High temperature membranes, J. S. Wainright, M.H. Litt and R.F.Savinell beschrieben.

Erfindungsgemäß werden Polymer-Elektrolyt-Membranen eingesetzt, die Phosphorsäure enthalten.

Die Membranen können unter anderem durch Quellen von flächigen Materialen, beispielsweise einer Polymerfolie, mit einer Flüssigkeit, die Phosphorsäure oder Phosphorsäure-freisetzende Verbindungen umfasst, oder durch Herstellung einer Mischung von Polymeren und Phosphorsäure-haltigen oder Phosphorsäurefreisetzenden Verbindungen und anschließendes Bilden einer Membran durch Formen eines flächigen Gegenstandes und anschließender Verfestigung, um eine Membran zu bilden, erzeugt werden.

Zu den hierfür geeigneten Polymeren gehören unter anderem Polyolefine, wie Poly(chloropren), Polyacetylen, Polyphenylen, Poly(*p-*xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat; Polymere mit C-S-Bindungen in der Hauptkette, beispielsweise Polysulfidether, Polyphenylensulfid, Polysulfone, Polyethersulfon; Polymere mit C-N-Bindungen in der Hauptkette, beispielsweise Polyimine, Polyisocyanide, Polyetherimin, Polyetherimide, Polyanilin, Polyaramide, Polyamide, Polyhydrazide, Polyurethane, Polyimide, Polyazole, Polyazoletherketon, Polyazine; flüssigkristalline Polymere, insbesondere Vectra sowie anorganische Polymere, beispielsweise Polysilane, Polycarbosilane, Polysiloxane, Polykieselsäure, Polysilikate, Silicone, Polyphosphazene und Polythiazyl.

Hierbei sind basische Polymere bevorzugt. Insbesondere kommen nahezu alle bekannten Polymermembranen in Betracht, bei denen die Protonen transportiert werden können. Hierbei sind Säuren bevorzugt, die Protonen ohne zusätzliches Wasser, z.B. mittels des sogenannten Grotthus Mechanismus, befördern können.

Als basisches Polymer im Sinne der vorliegenden Erfindung wird vorzugsweise ein basisches Polymer mit mindestens einem Stickstoffatom in einer Wiederholungseinheit verwendet.

Die Wiederholungseinheit im basischen Polymer enthält gemäß einer bevorzugten Ausführungsform einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Gemäß einem besonderen Aspekt der vorliegenden Erfindung werden hochtemperaturstabile Polymere eingesetzt, die mindestens ein Stickstoff-, Sauerstoff- und/oder Schwefelatom in einer oder in unterschiedlichen Wiederholungseinheiten enthalten.

Hochtemperaturstabil im Sinne der vorliegenden Erfindung ist ein Polymer, welches als polymerer Elektrolyt in einer Brennstoffzelle bei Temperaturen oberhalb 120°C dauerhaft betrieben werden kann. Dauerhaft bedeutet, dass eine erfindungsgemäße Membran mindestens 100 Stunden, vorzugsweise mindestens 500 Stunden bei mindestens 110°C, vorzugsweise mindestens 120°C, besonders bevorzugt mindestens 160°C betrieben werden kann, ohne dass die Leistung, die gemäß der in WO 01/18894 A2 beschriebenen Methode gemessen werden kann, um mehr als 50%, bezogen auf die Anfangsleistung abnimmt.

Die vorstehend genannten Polymeren können einzeln oder als Mischung (Blend) eingesetzt werden. Hierbei sind insbesondere Blends bevorzugt, die Polyazole und/oder Polysulfone enthalten. Die bevorzugten Blendkomponenten sind dabei Polyethersulfon, Polyetherketon und mit Sulfonsäuregruppen modifizierte Polymere, wie in der deutschen Patentanmeldung Nr. 10052242.4 und Nr. 10245451.8 beschrieben. Durch die Verwendung von Blends können die mechanischen Eigenschaften verbessert und die Materialkosten verringert werden.

Eine besonders bevorzugte Gruppe von basischen Polymeren stellen Polyazole dar. Ein basisches Polymer auf Basis von Polyazol enthält wiederkehrende Azoleinheiten der allgemeinen Formel (I) und/oder (11) und/oder (III) und/oder (IV) 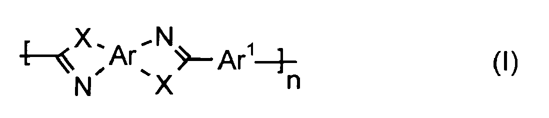 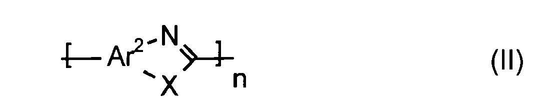 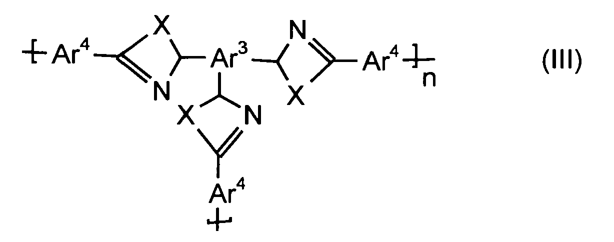 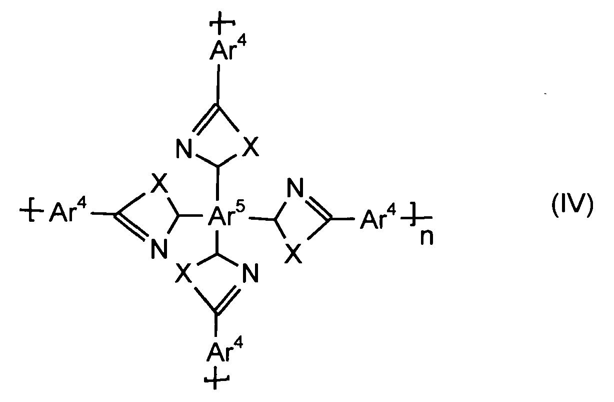 worin
- Ar: gleich oder verschieden sind und für eine vierbindige aromatische oder heteroaromatische Gruppe stehen, die ein- oder mehrkernig sein kann,
- Ar¹: gleich oder verschieden sind und für eine zweibindige aromatische oder heteroaromatische Gruppe stehen, die ein- oder mehrkernig sein kann,
- Ar²: gleich oder verschieden sind und für eine zwei oder dreibindige aromatische oder heteroaromatische Gruppe stehen, die ein- oder mehrkernig sein kann,
- Ar³: gleich oder verschieden sind und für eine dreibindige aromatische oder heteroaromatische Gruppe stehen, die ein- oder mehrkernig sein kann,
- Ar⁴: gleich oder verschieden sind und für eine dreibindige aromatische oder heteroaromatische Gruppe stehen, die ein- oder mehrkernig sein kann,
- Ar⁵: gleich oder verschieden sind und für eine vierbindige aromatische oder heteroaromatische Gruppe stehen, die ein- oder mehrkernig sein kann,
- X: gleich oder verschieden ist und für Sauerstoff, Schwefel oder eine Aminogruppe steht, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- n: eine ganze Zahl größer gleich 10, bevorzugt größer gleich 100 sind.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Bevorzugt sind Polyazole mit wiederkehrenden Einheiten der Formel (I), bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Die eingesetzten Polyazole, insbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,8 bis 10 dl/g, insbesondere 1 bis 10 dl/g.

Die Herstellung derartiger Polyazole ist bekannt und beschrieben in DE10117687.2, wobei ein oder mehrere aromatische Tetra-Amino-Verbindungen mit ein oder mehreren aromatischen Carbonsäuren bzw. deren Estern, die mindestens zwei Säuregruppen pro Carbonsäure-Monomer enthalten, in der Schmelze zu einem Präpolymer umgesetzt werden. Das entstehende Präpolymer erstarrt im Reaktor und wird anschließend mechanisch zerkleinert. Das pulverförmige Präpolymer wird üblich in einer Festphasen-Polymerisation bei Temperaturen von bis zu 400°C endpolymerisiert.

Zur Herstellung von Polymerfolien kann ein Polymer, vorzugsweise ein Polyazol in einem weiteren Schritt in polaren, aprotischen Lösemitteln, wie beispielsweise Dimethylacetamid (DMAc), gelöst und eine Folie mittels klassischer Verfahren erzeugt werden.

Zur Entfernung von Lösemittelresten kann die so erhaltene Folie mit einer Waschflüssigkeit, wie in der deutschen Patentanmeldung Nr. 10109829.4 beschrieben, behandelt werden. Durch die in der deutschen Patentanmeldung beschriebene Reinigung der Polyazolfolie von Lösungsmittelresten verbessern sich überraschend die mechanischen Eigenschaften der Folie. Diese Eigenschaften umfassen insbesondere den E-Modul, die Reißfestigkeit und die Bruchzähigkeit der Folie.

Zusätzlich kann der Polymerfilm weitere Modifizierungen, beispielsweise durch Vernetzung, wie in der deutschen Patentanmeldung Nr. 10110752.8 oder in WO 00/44816 beschrieben, aufweisen. In einer bevorzugten Ausführungsform enthält die eingesetzte Polymerfolie aus einem basischen Polymer und mindestens einer Blendkomponente zusätzlich einem Vernetzer, wie in der deutschen Patentanmeldung Nr. 10140147.7 beschrieben.

Die Dicke der Polyazolfolien kann in weiten Bereichen liegen. Vorzugsweise liegt die Dicke der Polyazolfolie vor einer Dotierung mit Säure im Bereich von 5 µm bis 2000 µm, besonders bevorzugt im Bereich von 10µm bis 1000 µm, ohne dass hierdurch eine Beschränkung erfolgen soll.

Um eine Protonen-Leitfähigkeit zu erzielen, werden diese Folien mit einer Phosphorsäure dotiert.

Weiterhin ist auch der Einsatz von Polyphosphorsäuren möglich, die anschließend zumindest teilweise hydrolysiert werden.

Über den Dotierungsgrad kann die Leitfähigkeit der Polyazolmembran beeinflusst werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 50, insbesondere zwischen 5 und 40, bevorzugt.

Im Allgemeinen werden hochkonzentrierte Säuren eingesetzt. Gemäß einem besonderen Aspekt der vorliegenden Erfindung beträgt die Konzentration der Phosphorsäure mindestens 50% Gew.-%, insbesondere mindestens 80 Gew.-%, bezogen auf das Gewicht des Dotierungsmittels.

Des Weiteren können protonenleitfähige Membranen auch durch ein Verfahren erhalten werden, umfassend die Schritte
I) Lösen von Polymeren, insbesondere Polyazolen in Polyphosphorsäure,
II) Erwärmen der Lösung, erhältlich gemäß Schritt A), unter Inertgas auf Temperaturen von bis zu 400°C,
III) Bilden einer Membran unter Verwendung der Lösung des Polymeren gemäß Schritt II) auf einem Träger und
IV) Behandlung der in Schritt III) gebildeten Membran, bis diese selbsttragend ist.

Des Weiteren können dotierte Polyazolfolien durch ein Verfahren erhalten werden, umfassend die Schritte
A) Mischen von einer oder mehreren aromatischen Tetraamino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht, erhältlich gemäß Schritt B), unter Inertgas auf Temperaturen von bis zu 350°C, vorzugsweise bis zu 280°C unter Ausbildung des Polyazol-Polymeren .
D) Behandlung der in Schritt C) gebildeten Membran (bis diese selbsttragend ist).

Die in Schritt A) einzusetzenden aromatischen bzw. heteroaromatschen Carbonsäure- und Tetraamino-Verbindungen wurden zuvor beschrieben.

Bei der in Schritt A) verwendeten Polyphosphorsäure handelt es sich um handelsübliche Polyphosphorsäuren, wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Die in Schritt A) erzeugte Mischung weist ein Gewichtsverhältnis Polyphosphorsäure zu Summe aller Monomeren von 1:10000 bis 10000:1, vorzugsweise 1:1000 bis 1000:1, insbesondere 1:100 bis 100:1, auf.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.

Die gemäß Schritt B) erzeugte Schicht hat eine Dicke zwischen 20 und 4000 µm, vorzugsweise zwischen 30 und 3500 µm, insbesondere zwischen 50 und 3000 µm.

Insofern die Mischung gemäß Schritt A) auch Tricarbonsäuren bzw. Tetracarbonsäuren enthält, wird hierdurch eine Verzweigung/ Vernetzung des gebildeten Polymeren erzielt. Diese trägt zur Verbesserung der mechanischen Eigenschaft bei.

Die Behandlung der gemäß Schritt C) erzeugten Polymerschicht erfolgt in Gegenwart von Feuchtigkeit bei Temperaturen und für eine Dauer, ausreichend bis die Schicht eine hinreichende Festigkeit für den Einsatz in Brennstoffzellen besitzt. Die Behandlung kann soweit erfolgen, dass die Membran selbsttragend ist, so dass sie ohne Beschädigung vom Träger abgelöst werden kann.

Gemäß Schritt C) wird das in Schritt B) erhaltene flächige Gebilde auf eine Temperatur von bis zu 350°C, vorzugsweise bis zu 280°C und besonders bevorzugt im Bereich von 200°C bis 250°C erhitzt. Die in Schritt C) einzusetzenden Inertgase sind in der Fachwelt bekannt. Zu diesen gehören insbesondere Stickstoff sowie Edelgase, wie Neon, Argon, Helium.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, dass die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die Hydrolyseflüssigkeit kann eine Lösung darstellen, wobei die Flüssigkeit auch suspendierte und/oder dispergierte Bestandteile enthalten kann. Die Viskosität der Hydrolyseflüssigkeit kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die Behandlung gemäß Schritt D) kann mit jeder bekannten Methode erfolgen. Beispielsweise kann die in Schritt C) erhaltene Membran in ein Flüssigkeitsbad getaucht werden. Des Weiteren kann die Hydrolyseflüssigkeit auf die Membran gesprüht werden. Weiterhin kann die Hydrolyseflüssigkeit über die Membran gegossen werden. Die letzteren Methoden haben den Vorteil, dass die Konzentration an Säure in der Hydrolyseflüssigkeit während der Hydrolyse konstant bleibt. Das erste Verfahren ist jedoch häufig kostengünstiger in der Ausführung.

### Gas-Diffusionselektroden

Neben der Polymer-Elektrolyt-Membran umfasst die erfindungsgemäße Membran-Elektroden-Einheit weiterhin mindestens eine Gas-Diffusionselektrode. Üblicherweise werden zwei elektrochemisch aktive Elektroden eingesetzt (Anode und Kathode), die durch die Polymer-Elektrolyt-Membran getrennt werden. Der Begriff "elektrochemisch aktiv" weist darauf hin, dass die Elektroden in der Lage sind, die Oxidation von Wasserstoff und/oder zumindest einem Reformat und die Reduktion von Sauerstoff zu katalysieren. Diese Eigenschaft kann durch Beschichtung der Elektroden mit katalytisch aktiven Substanzen, wie Platin und/oder Ruthenium, erhalten werden. Der Begriff "Elektrode" bedeutet, dass das Material elektrisch leitfähig ist. Die Elektrode kann ggf. eine Edelmetallschicht aufweisen. Derartige Elektroden sind bekannt und werden beispielsweise in US 4,191,618, US 4,212,714 und US 4,333,805 beschrieben.

Geeignete katalytisch aktive Materialien sind bevorzugt katalytisch aktive Metalle. Diese sind dem Fachmann bekannt. Geeignete katalytisch aktive Metalle sind im Allgemeinen ausgewählt aus der Gruppe bestehend aus Platin, Palladium, Iridium, Rhodium, Ruthenium und Mischungen davon, besonders bevorzugt Platin und/oder Ruthenium. In einer ganz besonders bevorzugten Ausführungsform wird Platin allein oder eine Mischung von Platin und Ruthenium eingesetzt. Es können auch die dem Fachmann bekannten Polyoxymetallate eingesetzt werden.

Die bevorzugt eingesetzten katalytisch aktiven Metalle oder Mischungen verschiedener Metalle können gegebenenfalls weitere Legierungszusätze ausgewählt aus der Gruppe bestehend aus Kobalt, Chrom, Wolfram, Molybdän, Vanadium, Eisen, Kupfer, Nickel, Silber, Gold, Iridium, Zinn usw. und Mischungen davon enthalten.

In einer weiteren bevorzugten Ausführungsform ist das wenigstens ein katalytisch aktives Material auf ein geeignetes Trägematerial aufgebracht. Geeignete Trägermaterialien sind dem Fachmann bekannt, beispielsweise Elektronenleiter ausgewählt aus der Gruppe bestehend aus Ruß, Graphit, Kohlenstoff-Fasern, Kohlenstoff-Nanopartikeln, Kohlenstoff-Schäumen, Kohlenstoff-Nanotubes und Mischungen davon.

Bei einer Brennstoffzelle, die mit einem Kohlenmonoxid enthaltenden Reformatgas als Brennstoff betrieben werden soll, ist es vorteilhaft, wenn der Anodenkatalysator eine möglichst hohe Resistenz gegenüber einer Vergiftung durch Kohlenmonoxid aufweist. In einem solchen Fall werden bevorzugt Elektrokatalysatoren auf der Basis von Platin/Ruthenium eingesetzt.

Die erfindungsgemäß einzusetzende Gas-Diffusionselektrode umfasst mindestens ein Gasdiffusionsmedium und mindestens eine Katalysatorschicht. Diese sind im Rahmen einer ersten bevorzugten Ausführungsform der vorliegenden Erfindung direkt miteinander verbunden. Im Rahmen einer alternativen bevorzugten Ausführungsform der vorliegenden Erfindung werden Katalysator-beschichtete Polymer-Elektrolytmembranen eingesetzt, die beim Zusammenfügen mit dem Gasdiffusionsmedium die Gas-Diffusionselektrode bilden.

Gasdiffusionsmedien sind per se bekannt und werden beispielsweise in US 6,017,650, US 6,379,834 und US 6,165,636 beschrieben. Sie dienen insbesondere zur Gasverteilung, zum Wassermanagement, zur Stromabführung, zum mechanischen Halt und zur Wärmeleitung.

Als Gasdiffusionsmedien werden üblicherweise flächige, elektrisch leitende und säureresistente Gebilde eingesetzt. Zu diesen gehören beispielsweise Graphitfaser-Papiere, Kohlefaser-Papiere, Graphitgewebe und/oder Papiere, die durch Zugabe von Ruß leitfähig gemacht wurden. Durch diese Schichten wird eine feine Verteilung der Gas- und/oder Flüssigkeitsströme erzielt.

Ferner können auch Gasdiffusionsmedien eingesetzt werden, welche ein mechanisch stabiles Stützmaterial enthalten, das mit mindestens einem elektrisch leitfähigen Material, z. B. Kohlenstoff (beispielsweise Ruß), und ggf. einem Bindemittel imprägniert ist. Natürlich können auch andere Typen elektrisch leitfähiger Partikel, wie z. B. Metallpartikel, anstelle des Kohlenstoffs oder zusätzlich zu ihm verwendet werden.

Für diese Zwecke besonders geeignete Stützmaterialien umfassen Fasern, beispielsweise in Form von Vliesen, Papieren oder Geweben, insbesondere Kohlefasern, Glasfasern oder Fasern enthaltend organische Polymere, beispielsweise Polypropylen, Polyester (Polyethylenterephthalat), Polyphenylensulfid oder Polyetherketone. Weitere Details zu derartigen Gasdiffusionsmedien können beispielsweise der WO 9720358 entnommen werden.

Die Gasdiffusionsmedien weisen vorzugsweise eine Dicke im Bereich von 80 µm bis 2000 µm, insbesondere im Bereich von 100 µm bis 1000 µm und besonders bevorzugt im Bereich von 150 µm bis 500 µm, auf.

Die Gasdiffusionsmedien können übliche Additive enthalten. Hierzu gehören unter anderem oberflächenaktive Substanzen.

Gemäß einer besonderen Ausführungsform kann mindestens eine Schicht der Gasdiffusionsmedien aus einem kompressiblen Material bestehen. Im Rahmen der vorliegenden Erfindung ist ein kompressibles Material durch die Eigenschaft gekennzeichnet, dass das Material ohne Verlust ihrer Integrität durch Druck auf die Hälfte, insbesondere auf ein Drittel ihres ursprünglichen Dicken gepresst werden kann.

Diese Eigenschaft weisen im Allgemeinen Gasdiffusionsschichten aus Graphitgewebe und/oder Papier, das durch Zugabe von Ruß leitfähig gemacht wurde, auf.

Im Rahmen der vorliegenden Erfindung umfasst das Gasdiffusionsmedium mindestens zwei Gasdiffusionsschichten,
■ wobei die erste Gasdiffusionsschicht eine elektrisch leitende makroporöse Schicht umfasst, bei welcher die Poren einen mittleren Porendurchmesser im Bereich von 10 µm bis 30 µm aufweisen,
■ wobei die zweite Gasdiffusionsschicht eine elektrisch leitende makroporöse Schicht umfasst, bei welcher die Poren einen mittleren Porendurchmesser im Bereich von 10 µm bis 30 µm aufweisen,
■ wobei das Gasdiffusionsmedium Polytetrafluoroethylen enthält und
■ wobei die erste Gasdiffusionsschicht eine höhere PolytetrafluoroethylenKonzentration aufweist als die zweite Gasdiffusionsschicht.

Hierbei kann es sich um zwei isolierte Schichten handeln. Weiterhin können die Schichten auch in einem einzigen Medium vorliegen, welches beispielsweise durch partielles Aufbringen von Polytetrafluoroethylen auf eine Seite des Gasdiffusionsmediums erhältlich ist.

Im Rahmen einer besonders bevorzugten Ausführungsform der vorliegenden Erfindung enthält das Gasdiffusionsmedium zusätzlich mindestens eine elektrisch leitende mikroporöse Schicht, bei welcher die Poren einen mittleren Porendurchmesser im Bereich von 100 nm bis 500 nm aufweisen.

Im Rahmen einer weiteren besonders bevorzugten Ausführungsform der vorliegenden Erfindung enthält das Gasdiffusionsmedium keine derartige elektrisch leitende mikroporöse Schicht.

Die Bestimmung der Porengröße kann in diesem Zusammenhang nach an sich bekannten Verfahren erfolgen. Besonders bewährt hat sich das Verfahren der Quecksilberporosimetrie, insbesondere nach der Norm DIN 66 133, Juni 1993.

Die Anordnung der Gasdiffusionsschichten ist prinzipiell beliebig. Besonders bewährt hat sich jedoch ein Aufbau, bei welchem die zweite Gasdiffusionsschicht zwischen der ersten Gasdiffusionsschicht und der Katalysatorschicht angeordnet ist. Weiterhin bewährt hat sich auch ein Aufbau, bei welchem die erste Gasdiffusionsschicht zwischen der zweiten Gasdiffusionsschicht und der Katalysatorschicht angeordnet ist.

Die Konzentrationen an Polytetrafluoroethylen in den zwei Gasdiffusionsschichten können prinzipiell frei gewählt werden, solange die erste Gasdiffusionsschicht eine höhere Polytetrafluoroethylenkonzentration als die zweite Gasdiffusionsschicht aufweist.

Vorzugsweise ist jedoch die Fluorkonzentration der ersten Gasdiffusionsschicht größer 0,35 mg/cm², besonders bevorzugt größer 0,40 mg/cm², insbesondere größer 0, 5 mg/cm².

Die zweite Gasdiffusionsschicht weist vorzugsweise eine Fluorkonzentration kleiner 0,30 mg/cm², besonders bevorzugt kleiner 0,23 mg/cm² insbesondere kleiner 0,2 mg/cm² auf.

Das Verhältnis der Fluorkonzentration in der ersten Gasdiffusionsschicht zur Fluorkonzentration in der zweiten Gasdiffusionsschicht ist vorzugsweise größer 1,1:1, günstigerweise größer 1,5:1, besonders bevorzugt größer 2:1, zweckmäßigerweise größer 4:1, insbesondere größer 6:1.

Das Verhältnis der Fluorkonzentration zur Kohlenstoffkonzentration in der ersten Gasdiffusionsschicht ist vorzugsweise mindestens 0,7, besonders bevorzugt mindestens 0,8, insbesondere mindestens 0,9.

Die Bestimmung der Fluorkonzentration kann in diesem Zusammenhang auf an sich bekannte Weise erfolgen. Besonders bewährt haben sich in diesem Zusammenhang Verfahren der Rasterelektronenmikroskopie (SEM), der Elektronenstrahl-Mikrobereichsanalyse (EPMA) und der Energy Dispersive X-Ray Spectroscopy (EDXS), insbesondere Verfahren der Energy Dispersive X-Ray Spectroscopy (EDXS), welche beispielsweise in der Druckschrift Ludwig Reimer Scanning Electron Microscopy: Physics of Image Formation and Microanalysis (Springer Series in Optical Sciences), Springer, Berlin; 2. Auflage; 17. September 1998 im Detail beschrieben werden.

Die erste Gasdiffusionsschicht umfasst vorzugsweise möglichst wenig Russpartikel mit einer Partikelgröße kleiner 100 nm. Bevorzugt enthält die erste Gasdiffusionsschicht mehr als 30 Gew.-%, zweckmäßigerweise mehr als 50 Gew.-%, günstigerweise mehr als 75 Gew.-%, besonders bevorzugt mehr als 95 Gew.-%, insbesondere 100 Gew.-%, Polytetrafluoroethylen, bezogen auf das Gesamtgewicht an Polytetrafluoroethylen und an Russpartikeln mit einer Partikelgröße kleiner 100 nm.

Die Dicken der ersten und der zweiten Gasdiffusionsschicht können prinzipiell frei gewählt werden. Die Dicke der ersten Gasdiffusionsschicht ist jedoch vorzugsweise größer 1 µm, besonders bevorzugt größer 5 µm, zweckmäßigerweise größer 10 µm, insbesondere größer 25 µm. Die Dicke der zweiten Gasdiffusionsschicht ist vorzugsweise größer 1 µm, besonders bevorzugt größer 5 µm, zweckmäßigerweise größer 10 µm, insbesondere größer 25 µm.

Besonders bewährt haben sich weiterhin Gasdiffusionsmedien, bei welchen im Querschnitt, die erste Gasdiffusionsschicht die ersten 5 % bis 30 % des Gasdiffusionsmediums, bezogen auf die Gesamtdicke des Gasdiffusionsmediums, ausmacht.

Die Dicken der Gasdiffusionsschichten können in diesem Zusammenhang auf an sich bekannte Weise, insbesondere mittels Rasterelektronenmikroskop (REM) erhalten werden.

Die Katalysatorschicht oder Katalysatorschichten enthält oder enthalten katalytisch aktive Substanzen. Zu diesen gehören unter anderem Edelmetalle der Platingruppe, d.h. Pt, Pd, Ir, Rh, Os, Ru, oder auch die Edelmetalle Au und Ag. Es können auch Legierungen aller vorgenannten Metalle eingesetzt werden. Weiterhin kann mindestens eine Katalysatorschicht Legierungen der Platingruppenelemente mit unedlen Metallen wie zum Beispiel Fe, Co, Ni, Cr, Mn, Zr, Ti, Ga, V usw. enthalten.

Falls die Gasdiffusionselektrode gemäß der vorliegenden Erfindung als Anode in einer Membranelektrodeneinheit für Direktmethanol-, Wasserstoff/Luft- oder Reformat/Luft-Brennstoffzellen verwendet wird, ist es bevorzugt, dass die Katalysatoren Platin und/oder Ruthenium umfassen.

Falls die Gasdiffusionselektrode gemäß der vorliegenden Erfindung als Kathode in Membranelektroneneinheiten für Direktmethanol-, Wasserstoff/Luft- oder Reformat/Luft-Brennstoffzellen verwendet wird, ist es bevorzugt, dass die Katalysatoren Platin, Platiniridium- oder Platinrhodiumlegierungen umfassen.

Die katalytisch aktiven Partikel, die die zuvor genannten Substanzen umfassen, können als Metallpulver, sogenanntes Edelmetallschwarz, insbesondere in Form von Platin und/oder Platinlegierungen, eingesetzt werden. Derartige Partikel weisen im Allgemeinen eine Größe im Bereich von 5 nm bis 200 nm, vorzugsweise im Bereich von 7 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Weiterhin können auch elektrisch leitfähige Metalloxide, wie zum Beispiel SnOₓ, TiOₓ, oder Phosphate, wie z.B. FePOₓ, NbPOₓ, Zr_{y}(POₓ)_{z} als Trägermaterial verwendet werden. Hierbei kennzeichnen die Indices x, y und z den Sauerstoff oder Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im Allgemeinen im Bereich von 1 Gew.-% bis 80 Gew.-%, vorzugsweise 5 Gew.-% bis 60 Gew.-% und besonders bevorzugt 10 Gew.-% bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 nm bis 1000 nm, insbesondere 30 nm bis 100 nm. Die Größe der sich hierauf befindlichen Metallpartikel liegt vorzugsweise im Bereich von 1 nm bis 20 nm, insbesondere 1 nm bis 10 nm und besonders bevorzugt 2 nm bis 6 nm.

Die Größen der unterschiedlichen Partikel stellen Mittelwerte dar und können über Transmissionselektronenmikroskopie oder Pulver-Röntgendiffraktometrie bestimmt werden.

Die zuvor dargelegten katalytisch aktiven Partikel können im Allgemeinen kommerziell erhalten werden.

Des Weiteren kann die katalytisch aktive Schicht übliche Additive enthalten.
Hierzu gehören unter anderem Fluorpolymere wie z.B. Polytetrafluorethylen (PTFE), protonenleitende lonomere und oberflächenaktive Substanzen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Im Rahmen einer weiteren bevorzugten Ausführungsform der vorliegenden Erfindung ist es besonders bevorzugt, dass die Katalysatorschicht sulfoniertes Polytetrafluorethylen enthält, und der Anteil an sulfoniertem Polytetrafluorethylen in der Katalysatorschicht liegt vorzugsweise im Bereich von 10 Gew.-% bis 300 Gew.-%, bezogen auf das Gesamtgewicht des katalytisch aktiven Materials. Dies bedingt insbesondere eine erhöhte Sauerstoff-Löslichkeit in der Kathode, insbesondere bei einer Temperatur größer 100°C.

Weiterhin ist der Gehalt an unsulfoniertem Polytetrafluorethylen in der Katalysatorschicht vorteilhafter Weise kleiner 30 Gew.-%, günstigerweise kleiner 10 Gew.-%, besonders bevorzugt kleiner 1 Gew.-%, jeweils bezogen auf das Gesamtgewicht der Katalysatorschicht.

Darüber hinaus ist der Gehalt an unsulfoniertem Polytetrafluorethylen in der Katalysatorschicht vorteilhafter Weise kleiner 100 Gew.-%, günstigerweise kleiner 50 Gew.-%, besonders bevorzugt kleiner 1 Gew.-%, jeweils bezogen auf das Gesamtgewicht an sulfoniertem Polytetrafluorethylen in der Katalysatorschicht.

Im Rahmen einer besonders bevorzugten Ausführungsform der vorliegenden Erfindung enthält die Katalysatorschicht kein unsulfoniertes. Polytetrafluorethylen.

Ferner ist der Gehalt an Tensiden in der Katalysatorschicht vorteilhafterweise kleiner 30 Gew.-%, günstigerweise kleiner 10 Gew.-%, besonders bevorzugt kleiner 1 Gew.-%, jeweils bezogen auf das Gesamtgewicht der Katalysatorschicht.

Darüber hinaus ist der Gehalt an Tensiden in der Katalysatorschicht vorteilhafter Weise kleiner 100 Gew.-%, günstigerweise kleiner 50 Gew.-%, besonders bevorzugt kleiner 1 Gew.-%, jeweils bezogen auf das Gesamtgewicht an sulfoniertem Polytetrafluorethylen in der Katalysatorschicht

Im Rahmen einer besonders bevorzugten Ausführungsform der vorliegenden Erfindung enthält die Katalysatorschicht keine Tenside.

Die Katalysatorschicht weist bevorzugt eine Dicke im Bereich von 1 µm bis 500 µm, insbesondere im Bereich von 5 µm bis 250 µm, vorzugsweise im Bereich von 10 µm bis 150 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonders bevorzugten Ausführungsform der vorliegenden Erfindung beträgt der Edelmetallgehalt der Katalysatorschicht 0,1 mg/cm² bis 5,0 mg/cm², vorzugsweise 0,3 mg/cm² bis 4,0 mg/cm² und besonders bevorzugt 0,3 mg/cm² bis 3,0 mg/cm². Diese Werte können durch Elementaranalyse einer flächigen Probe bestimmt werden.

Für weitere Informationen über Membran-Elektroden-Einheiten wird auf die Fachliteratur, insbesondere auf die Patentanmeldungen WO 01/18894 A2, DE 195 09 748, DE 195 09 749, WO 00/26982, WO 92/15121 und DE 197 57 492 sowie auf die Publikationen W. Vielstich, H. Gasteiger, A. Lamm (Herausgeber) Handbook of Fuel Cells - Fundamentals, Technology and Applications, Band 3: Fuel Cell Technology and Applications, Kapitel 43: Principles of MEA preparation 2003 John Wiley and Sons, Ltd. Seiten 538-565 und W. Vielstich, H. Gasteiger, A. Lamm (Herausgeber) Handbook of Fuel Cells - Fundamentals, Technology and Applications, Band 3: Fuel Cell Technology and Applications, Kapitel 42: Diffusion media materials and characterisation 2003 John Wiley and Sons, Ltd. Seiten 538-565 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden, Gasdiffusionslagen und Katalysatoren ist auch Bestandteil der Beschreibung.

Die Herstellung der erfindungsgemäßen Membranelektroneneinheit kann auf an sich bekannte Weise durch Zusammenfügen der Elemente erfolgen. Eine derartige Membranelektrodeneinheit wird vorzugsweise durch Heißpressen hergestellt. Zu diesem Zweck wird eine Gasdiffusionselektrode und eine Membran, vorzugsweise eine Ionenaustauschmembran, insbesondere eine protonenleitende Membran, auf eine Temperatur im Bereich von 50°C bis 200°C erwärmt und bei einem Druck im Bereich von 1 MPa bis 10 MPa verpresst. Ein paar Minuten reichen im Allgemeinen aus, um die Katalysatorschicht mit der Membranschicht zu verbinden. Diese Zeit ist vorzugsweise im Bereich von 30 Sekunden bis 10 Minuten, insbesondere im Bereich von 30 Sekunden bis 5 Minuten.

Gemäß einer bevorzugten Variante wird die Membranelektroneneinheit erhalten, indem man eine Katalysatorschicht zunächst auf die Membran aufbringt, um zunächst eine Katalysator-beschichtete Membran (CCM) herzustellen, um dann die Katalysator-beschichtete Membran mit einem Gasdiffusionsmedium auf einem Substrat zu laminieren. Das einzusetzende Gasdiffusionsmedium hat dabei die zuvor beschriebene Mehrschichtstruktur.

Besonders bewährt hat sich auch eine Vorgehensweise, bei welcher man
i.) Polytetrafluoroethylen auf ein Gasdiffusionsmedium aufbringt, das eine elektrisch leitende makroporöse Schicht umfasst, bei welcher die Poren einen mittleren Porendurchmesser im Bereich von 10 µm bis 30 µm aufweisen,
ii.) das Gasdiffusionsmedium aus Schritt i) bei Temperaturen größer 100°C tempert,
iii.) ein Katalysatormaterial auf das Gasdiffusionsmedium aus Schritt ii) aufbringt.

Günstig ist eine Temperaturbehandlung bei einer Temperatur kleiner 280°C, bevorzugt im Bereich von 40°C bis 250°C, insbesondere im Bereich von 60°C bis kleiner 200°C. Die Dauer der Temperaturbehandlung wird vorzugsweise im Bereich von 1 Minute bis 2 h gewählt.

Das Aufbringen des Katalysatormaterials erfolgt vorzugsweise unter Verwendung einer Katalysatortinte, die das katalytisch aktive Material und ein Bindemittel, bevorzugt sulfoniertes Polytetrafluorethylen, umfasst. Der Anteil an sulfoniertem Polytetrafluorethylen im Bindemittel liegt vorzugsweise im Bereich von 30 Gew.-% bis 300 Gew.-%, bezogen auf das Gesamtgewicht an katalytisch aktivem Material in der Katalysatortinte. Weiterhin ist der Gehalt an unsulfoniertem Polytetrafluorethylen im Bindemittel vorteilhafter Weise kleiner 100 Gew.-%, bevorzugt kleiner 50 Gew.-%, besonders bevorzugt kleiner 10 Gew.-%, ganz besonders bevorzugt kleiner 1 Gew.-%, insbesondere 0 Gew.-%, bezogen auf das Gesamtgewicht an sulfoniertem Polytetrafluorethylen in der Katalysatortinte. Darüber hinaus ist der Gehalt an Tensiden im Bindemittel vorteilhafter Weise kleiner 100 Gew.-%, bevorzugt kleiner 50 Gew.-%, besonders bevorzugt kleiner 10 Gew.-%, ganz besonders bevorzugt kleiner 1 Gew.-%, insbesondere 0 Gew.-%, bezogen auf das Gesamtgewicht an sulfoniertem Polytetrafluorethylen in der Katalysatortinte.

Die erfindungsgemäße Membran-Elektroden-Einheit (MEE) eignet sich besonders für Brennstoffzellenanwendungen, insbesondere zur Stromerzeugung bei einer Temperatur größer 100°C.

Überraschender Weise wurde festgestellt, dass erfindungsgemäße Brennstoff-Einzelzellen aufgrund ihrer Dimensionsstabilität bei schwankenden Umgebungstemperaturen und Luftfeuchtigkeit problemlos gelagert oder versendet werden können. Auch nach längerer Lagerung oder nach Versand an Orte mit deutlich unterschiedlichen klimatischen Bedingungen stimmen die Dimensionen der Brennstoff-Einzelzellen problemlos für den Einbau in Brennstoffzellenstacks. Die Brennstoff-Einzelzelle muss für einen externen Einbau dann vor Ort nicht mehr konditioniert werden, was die Herstellung der Brennstoffzelle vereinfacht und Zeit und Kosten spart.

Ein Vorteil bevorzugter Brennstoff-Einzelzellen ist, dass sie den Betrieb der Brennstoffzelle bei Temperaturen oberhalb 120 °C ermöglichen. Dies gilt für gasförmige und flüssige Brennstoffe, wie z.B. Wasserstoff enthaltende Gase, die z.B. in einem vorgeschalteten Reformierungsschritt aus Kohlenwasserstoffen hergestellt werden. Als Oxidanz kann dabei z.B. Sauerstoff oder Luft verwendet werden.

Ein weiterer Vorteil bevorzugter Brennstoff-Einzelzellen ist, dass sie beim Betrieb oberhalb 120 °C auch mit reinen Platinkatalysatoren, d.h. ohne einen weiteren Legierungsbestandteil, eine hohe Toleranz gegen Kohlenmonoxid aufweisen. Bei Temperaturen von 160 °C kann z.B. mehr als 1 % CO im Brenngas enthalten sein, ohne dass dies zu einer merklichen Reduktion der Leistung der Brennstoffzelle führt.

Bevorzugte Brennstoff-Einzelzellen können in Brennstoffzellen betrieben werden, ohne dass die Brenngase und die Oxidanzien trotz der möglichen hohen Betriebstemperaturen nicht befeuchtet werden müssen. Die Brennstoffzelle arbeitet dennoch stabil und die Membran verliert ihre Leitfähigkeit nicht. Dies vereinfacht das gesamte Brennstoffzellensystem und bringt zusätzliche Kostenersparnisse, da die Führung des Wasserkreislaufs vereinfacht wird. Weiter wird hierdurch auch das Verhalten bei Temperaturen unterhalb 0 °C des Brennstoffzellensystems verbessert.

Bevorzugte Brennstoff-Einzelzellen erlauben überraschend, dass die Brennstoffzelle problemlos auf Raumtemperatur und darunter abgekühlt werden kann und danach wieder in Betrieb genommen werden kann, ohne an Leistung zu verlieren. Herkömmliche auf Phosphorsäure basierende Brennstoffzellen müssen dagegen auch beim Abschalten des Brennstoffzellensystems manchmal bei einer Temperatur oberhalb von 40 °C gehalten werden, um eine irreversible Schädigung zu vermeiden.

Weiterhin zeichnen sich die erfindungsgemäßen Brennstoff-Einzelzellen durch eine verbesserte Temperatur- und Korrosionsbeständigkeit und eine vergleichsweise niedrige Gasdurchlässigkeit, insbesondere bei hohen Temperaturen, aus. Eine Abnahme der mechanischen Stabilität und der strukturellen Integrität, insbesondere bei hohen Temperaturen, wird erfindungsgemäß bestmöglich vermieden.

Darüber hinaus können die erfindungsgemäßen Brennstoff-Einzelzellen kostengünstig und einfach hergestellt werden.

Im Folgenden wird die Erfindung durch Beispiele und Vergleichsbeispiele näher erläutert, ohne dass hierdurch eine Beschränkung des Erfindungsgedankens erfolgen soll.

### Herstellung der Katalysatortinte

2,4 Anteile Nafion-Ionomer in H₂O (10wt%) Äquivalentgewicht1100 (Fa. DuPont) und 1,85 Anteile H₂O wurden in einer Glassflasche vorgelegt und mit einem Magnetrührer aufgerührt. Dann wurde ein Anteil Katalysator Pt/C eingewogen und unter Rühren langsam dem Ansatz beigemischt. Der Ansatz wurde ca. 5-10 Minuten bei Raumtemperatur mit dem Magnetrührer nachgerührt. Die Probe wurde dann mit Ultraschall solange behandelt, bis der Wert der eingetragenen Energie 0,015 KWh betrug. Dieser Wert bezog sich auf eine Ansatzgröße von 20g.

### Herstellung von Gasdiffusionselektroden(GDE):

### Vergleichsprobe 1:

Die katalysatorbeschichtete Gasdiffusionselektrode (GDE) wurde hergestellt, indem die Katalysatorformulierung mittels Siebdruck auf die mikroporöse Kohlenstoffschicht (MPL) einer mit Teflon imprägnierten Gasdiffusionslage (GDL) (H2315 IX11 CX45) der Firma Freudenberg aufgedruckt wurde. Die Dicken und Beladungen der GDE sind in Tabelle 1 aufgelistet.

### Probe 1:

Eine mit Teflon imprägnierte GDL mit mikroporöser Kohlenstoffschicht (MPL) der Firma Freudenberg (H2315 IX11 CX45) wurde durch Sprühen von zusätzlich 0,35 mg_{Teflon}/cm² Teflon auf die Rückseite (MPL abgewandte Seite) des GDL-Materials beschichtet. Anschließend wurde bei 340°C 2 Stunden lang temperiert. Die katalysatorbeschichtete Gasdiffusionselektrode (GDE) wurde im Anschluss durch Siebdrucken auf diese GDL (MPL-Seite) hergestellt. Die Dicken und Beladungen der GDE sind in Tabelle 1 aufgelistet.

### Vergleichsprobe 2:

Es wurde versucht, die Katalysatorformulierung auf eine mit Teflon imprägnierte GDL (H2315 IX11, ohne MPL) der Firma Freudenberg mittels Siebdruck zu drucken. Diese GDL ließ sich mit der Katalysatortinte nicht bedrucken.

### Probe 2:

Eine mit Teflon imprägnierte GDL (H2315 IX11, ohne MPL) der Firma Freudenberg wurde mit zusätzlich 0,29 mg_{Teflon}/cm² Teflon auf der für den Katalysatorauftrag vorgesehenen Seite durch Sprühen beschichtet. Die Probe wurde dann bei 340°C 2 Stunden lang temperiert. Die katalysatorbeschichtete Gasdiffusionselektrode (GDE) wurde im Anschluss durch Siebdrucken auf diese GDL hergestellt. Die Dicken und Beladungen der GDE sind in Tabelle 1 aufgelistet.

### Probe 3:

Eine mit Teflon imprägnierte GDL (H2315 IX11, ohne MPL) der Firma Freudenberg wurde mit zusätzlich 1,45 mg_{Teflon}/cm² Teflon auf der für den Katalysatorauftrag bestimmten Seite durch Sprühen beschichtet und dann bei 340°C 2 Stunden lang temperiert. Die katalysatorbeschichtete Gasdiffusionselektrode (GDE) wurde im Anschluss durch Siebdrucken auf diese GDL hergestellt. Die Dicken und Beladungen der GDE sind in Tabelle 1 aufgelistet.

### Probe 4:

Eine mit Teflon imprägnierte Gasdiffusionslage (GDL) der Firma Freudenberg (H2315 IX11, ohne MPL) wurde beidseitig mit jeweils mit 0,4 mg_{Teflon}/cm² Teflon durch Sprühen beschichtet und anschließend bei 340°C 2 Stunden lang temperiert. Die katalysatorbeschichtete Gasdiffusionselektrode (GDE) wurde im Anschluss durch Siebdrucken (einseitig) auf diese GDL hergestellt. Die Dicken und Beladungen der GDE sind in Tabelle 1 aufgelistet.

**Tabelle 1: Schichtdicken und Katalysatorbeladungen**

| | GDE | Schichtdicke [µm] | Kat-Beladung [mg_{Pt}/cm²] |
|---|---|---|---|
| Vergleichsprobe 1 | Anode | 97 | 1,02 |
| | Kathode | 99 | 1,03 |
| Vergleichsprobe 2 | Anode | --- | --- |
| | Kathode | --- | --- |
| Probe1 | Anode | 75 | 1,04 |
| | Kathode | 79 | 1,05 |
| Probe2 | Anode | 50 | 1,01 |
| | Kathode | 51 | 0,99 |
| Probe3 | Anode | 62 | 1,01 |
| | Kathode | 66 | 1,03 |
| Probe4 | Anode | 63 | 0,99 |
| | Kathode | 65 | 0,98 |

### MEA-Herstellung und Zellmessung:

Für die Zelltests wurden MEAs (Membran-Elektroden-Assembly) symmetrisch aus den so hergestellten GDEs (Anode und Kathode gleich) und Celtec-P Membranen zusammengesetzt. Mit einem Abstandshalter wurde bei 140°C 30 Sekunden lang auf 75% der Ausgangsdicke verpresst. Die aktive Fläche der MEA betrug 45cm². Anschließend wurden die Proben in den Zellblock eingebaut und dann bei 160°C, unter Verwendung von H₂ (Anoden-Stöchiometrie 1,2) und Luft (Kathoden-Stöchiometrie 2) getestet. Die Leistung der Proben bei 0,6 A/cm² wird in Tabelle 2 verglichen.

**Tabelle 2: Leistung der Proben bei 0,6A/cm²**

| | P [mW/cm²] bei 0,6 A/cm² |
|---|---|
| Vergleichsprobe 1 | 245 |
| Vergleichsprobe 2 | --- |
| Probe1 | 313 |
| Probe2 | 314 |
| Probe3 | 315 |
| Probe4 | 314 |

## Patentansprüche

1. Membran-Elektrodeneinheit,
umfassend mindestens eine Phosphorsäure-haltige Polymerelektrolytmembran und mindestens eine Gas-Diffusionselektrode, wobei die Gas-Diffusionselektrode umfasst:
i. mindestens eine Katalysatorschicht und
ii. mindestens ein Gasdiffusionsmedium, aufweisend mindestens zwei Gasdiffusionsschichten,
■ wobei die erste Gasdiffusionsschicht eine elektrisch leitende makroporöse Schicht umfasst, bei welcher die Poren einen mittleren Porendurchmesser im Bereich von 10 µm bis 30 µm aufweisen,
■ wobei die zweite Gasdiffusionsschicht eine elektrisch leitende makroporöse Schicht umfasst, bei welcher die Poren einen mittleren Porendurchmesser im Bereich von 10 µm bis 30 µm aufweisen,
■ wobei das Gasdiffusionsmedium Polytetrafluoroethylen enthält,
**dadurch gekennzeichnet, dass**
die erste Gasdiffusionsschicht eine höhere PolytetrafluoroethylenKonzentration aufweist als die zweite Gasdiffusionsschicht.

2. Membran-Elektrodeneinheit nach Anspruch 1, **dadurch gekennzeichnet, dass** die zweite Gasdiffusionsschicht zwischen der ersten Gasdiffusionsschicht und der Katalysatorschicht angeordnet ist.

3. Membran-Elektrodeneinheit nach Anspruch 1, **dadurch gekennzeichnet, dass** die erste Gasdiffusionsschicht zwischen der zweiten Gasdiffusionsschicht und der Katalysatorschicht angeordnet ist.

4. Membran-Elektrodeneinheit nach mindestens einem der vorangehenden Ansprüche, **dadurch gekennzeichnet, dass** die erste Gasdiffusionsschicht eine Dicke größer 1 µm aufweist.

5. Membran-Elektrodeneinheit nach mindestens einem der vorangehenden Ansprüche, **dadurch gekennzeichnet, dass** die erste Gasdiffusionsschicht eine Fluorkonzentration größer 0,35 mg/cm² aufweist.

6. Membran-Elektrodeneinheit nach mindestens einem der vorangehenden Ansprüche, **dadurch gekennzeichnet, dass** die zweite Gasdiffusionsschicht eine Fluorkonzentration kleiner 0,30 mg/cm² aufweist.

7. Membran-Elektrodeneinheit nach mindestens einem der vorangehenden Ansprüche, **dadurch gekennzeichnet, dass** das Verhältnis der Fluorkonzentration in der ersten Gasdiffusionsschicht zur Fluorkonzentration in der zweiten Gasdiffusionsschicht größer 1,1:1 ist.

8. Membran-Elektrodeneinheit nach mindestens einem der vorangehenden Ansprüche, **dadurch gekennzeichnet, dass** die erste Gasdiffusionsschicht mehr als 30 Gew.-% Polytetrafluoroethylen, bezogen auf das Gesamtgewicht an Polytetrafluoroethylen und an Russpartikeln mit einer Partikelgröße kleiner 100 nm, enthält.

9. Membran-Elektrodeneinheit nach mindestens einem der vorangehenden Ansprüche, **dadurch gekennzeichnet, dass**, im Querschnitt, die erste Gasdiffusionsschicht die ersten 5 % bis 30 % des Gasdiffusionsmediums ausmachen, bezogen auf die Gesamtdicke des Gasdiffusionsmediums.

10. Membran-Elektrodeneinheit nach mindestens einem der vorangehenden Ansprüche, **dadurch gekennzeichnet, dass** die Katalysatorschicht sulfoniertes Polytetrafluorethylen enthält.

11. Membran-Elektrodeneinheit nach Anspruch 10, **dadurch gekennzeichnet, dass** der Gehalt an sulfoniertem Polytetrafluorethylen in der Katalysatorschicht im Bereich von 10 Gew.-% bis 300 Gew.-% liegt, bezogen auf das Gesamtgewicht des katalytisch aktiven Materials.

12. Membran-Elektrodeneinheit nach mindestens einem der vorangehenden Ansprüche, **dadurch gekennzeichnet, dass** der Gehalt an unsulfoniertem Polytetrafluorethylen in der Katalysatorschicht kleiner 100 Gew.-% ist, bezogen auf das Gesamtgewicht an sulfoniertem Polytetrafluorethylen in der Katalysatorschicht.

13. Membran-Elektrodeneinheit nach mindestens einem der vorangehenden Ansprüche, **dadurch gekennzeichnet, dass** sie mindestens ein Polyazol umfasst.

14. Membran-Elektrodeneinheit nach Anspruch 13, **dadurch gekennzeichnet, dass** das Polyazol wiederkehrende Azoleinheiten der allgemeinen Formel (I) und/oder (II) und/oder (III) und/oder (IV) enthält 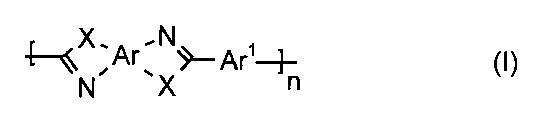 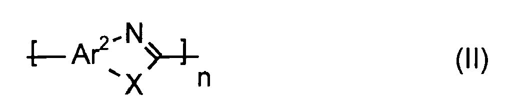 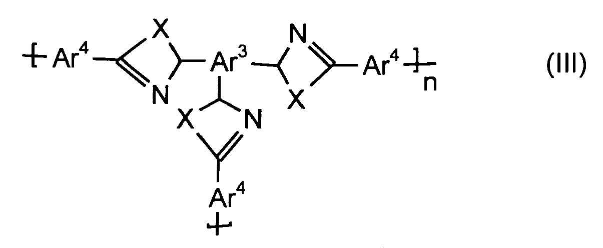 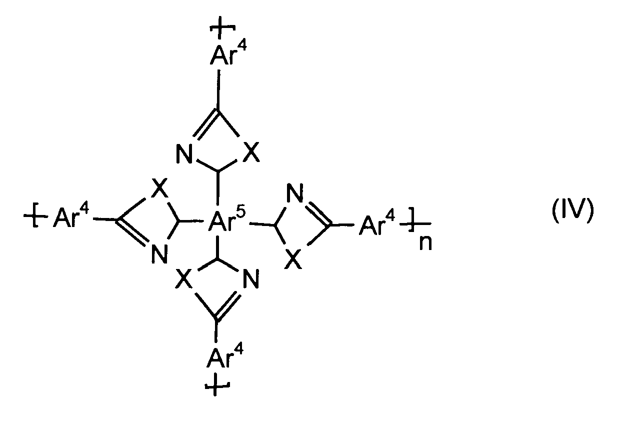 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine zwei oder dreibindige aromatische oder heteroaromatische Gruppe, die ein- oder mehrkernig sein kann,
Ar³ gleich oder verschieden sind und für eine dreibindige aromatische oder heteroaromatische Gruppe, die ein- oder mehrkernig sein kann,
Ar⁴ gleich oder verschieden sind und für eine dreibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
n eine ganze Zahl größer gleich 10, bevorzugt größer gleich 100 ist.

15. Verfahren zur Herstellung einer Membran-Elektrodeneinheit nach mindestens einem der vorangehenden Ansprüche, bei welchem man
i.) Polytetrafluoroethylen auf ein Gasdiffusionsmedium aufbringt, das eine elektrisch leitende makroporöse Schicht umfasst, bei welcher die Poren einen mittleren Porendurchmesser im Bereich von 10 µm bis 30 µm aufweisen,
ii.) das Gasdiffusionsmedium aus Schritt i) bei Temperaturen größer 100°C tempert,
iii.) ein Katalysatormaterial auf das Gasdiffusionsmedium aus Schritt ii) aufbringt.

16. Brennstoffzelle, umfassend mindestens eine Membran-Elektrodeneinheit nach mindestens einem der Ansprüche 1 bis 14.

17. Verwendung einer Brennstoffzelle nach Anspruch 16 zur Stromerzeugung bei einer Temperatur größer 100°C.
